# EUROPEAN PATENT APPLICATION

(11) **EP 4 712 532 A1**
(43) Date of publication of application: **18.03.2026**
(21) Application number: 24825139.9
(22) Date of filing: 03.06.2024
(51) Int. Cl.: H04W 12/06

(54) **SHORT MESSAGE INFORMATION TRANSMISSION METHOD, COMPUTER DEVICE, AND STORAGE MEDIUM**

(30) Priority: 21.06.2023 CN 202310744072
(71) Applicant: ZTE CORPORATION, Shenzhen, Guangdong 518057 (CN)
(72) Inventor: YANG, Haicheng, Shenzhen, Guangdong 518057 (CN); ZHOU, Jinxing, Shenzhen, Guangdong 518057 (CN)
(74) Representative: Ziebig Hengelhaupt Intellectual Property Attorneys Patentanwaltskanzlei PartGmbB
(86) International application number: PCT/CN2024/097073
(87) International publication number: WO 2024/260243

(57) **Abstract**

The present application relates to the technical field of network communications, and relates to a short message information transmission method, a computer device, and a storage medium. The method comprises: a satellite network receiving first short message information sent by a sending end, the first short message information comprising first position information; authenticating the first position information in the first short message information to obtain an authentication result; and sending the first short message information and the authentication result to a receiving end of the first short message information.

## Description

### CROSS-REFERENCE TO RELATED APPLICATIONS

The present application claims priority to Chinese Patent Application No. 202310744072.6, filed with the China Patent Office on June 21, 2023, and entitled "SHORT MESSAGE INFORMATION TRANSMISSION METHOD, COMPUTER DEVICE, AND STORAGE MEDIUM", which is incorporated herein by reference in its entirety.

### TECHNICAL FIELD

Embodiments of the present application relate to the technical field of network communications, and particularly relate to a short message information transmission method, a computer device, and a storage medium.

### BACKGROUND

In recent years, the network communication technology has developed rapidly. When exchanging information through short message information, a sender may add location information to the short message information to add content of the information, so that a receiver can acquire the location information of the sender.

However, there are currently some tools that can modify the location information acquired by software. The location information carried in the short message information of the sender has the risk of being tampered with or forged, making it difficult for the receiver to determine the authenticity of the location information in the obtained short message information, resulting in a poor transmission effect of the short message information.

### SUMMARY

Embodiments of the present application provide a short message information transmission method, a computer device, and a storage medium. The technical solution is as follows.

In one aspect, a short message information transmission method is provided. The method is performed by a satellite network, and includes: receiving first short message information from a sending end, the first short message information including first location information; authenticating the first location information in the first short message information to obtain an authentication result; and sending the first short message information and the authentication result to a receiving end of the first short message information.

In another aspect, a short message information transmission method is provided. The method is performed by a sending end, and includes: acquiring initial short message information, and first location information of the sending end; adding the first location information to the initial short message information to obtain first short message information; and sending the first short message information to a satellite network such that the satellite network authenticates the first location information, and sending the first short message information and an authentication result to a receiving end of the first short message information.

In another aspect, a short message information transmission method is provided. The method is performed by a receiving end, and includes: receiving target short message information and an authentication result sent by a sending end through a satellite network, wherein the target short message information includes location information; and the authentication result is generated by the satellite network after authenticating the location information, and is used to indicate the location information is real location information or suspicious location information; and displaying the target short message information and the authentication result.

In another aspect, a computer device is provided. The computer device includes a processor and a memory, the memory stores at least one computer program, and the at least one computer program is loaded and executed by the processor to implement the short message information transmission method above.

In another aspect, a computer-readable storage medium is provided. The computer-readable storage medium has at least one computer program stored therein, and the computer program is loaded and executed by a processor to implement the short message information transmission method above.

In another aspect, a computer program product is provided. The computer program product includes at least one computer program, and the computer program is loaded and executed by a processor to implement the short message information transmission method provided in various optional implementations above.

### BRIEF DESCRIPTION OF DRAWINGS

Accompanying drawings here, which are incorporated in and constitute a part of this specification, illustrate embodiments consistent with the present application, and together with the specification, serve to explain the principles of the present application.
FIG. 1 shows a flowchart of a short message information transmission method provided by an exemplary embodiment of the present application.
FIG. 2 shows a flowchart of a short message information transmission method provided by an exemplary embodiment of the present application.
FIG. 3 shows a flowchart of a short message information transmission method provided by an exemplary embodiment of the present application.
FIG. 4 shows a flowchart of a short message information transmission method provided by an exemplary embodiment of the present application.
FIG. 5 shows a flowchart of a short message information transmission method provided by an exemplary embodiment of the present application.
FIG. 6 shows a schematic diagram of an interface of a receiving end provided by an exemplary embodiment of the present application.
FIG. 7 shows a block diagram of a short message information transmission apparatus provided by an exemplary embodiment of the present application.
FIG. 8 shows a block diagram of a short message information transmission apparatus provided by an exemplary embodiment of the present application.
FIG. 9 shows a block diagram of a short message information transmission apparatus provided by an exemplary embodiment of the present application.

### DETAILED DESCRIPTION

Exemplary embodiments will be illustrated in detail here, examples of which are represented in accompanying drawings. When the following descriptions refer to the accompanying drawings, the same number in the different accompanying drawings represents the same or similar elements unless otherwise indicated. The implementations described in the following exemplary embodiments do not represent all implementations consistent with the present application. On the contrary, they are merely examples of an apparatus and method consistent with some aspects of the present application as detailed in the appended claims.

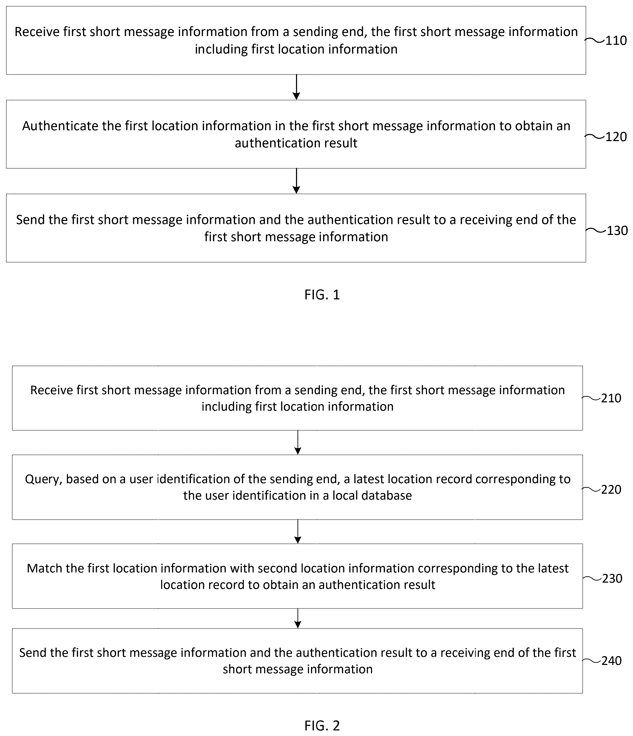

In order to authenticate location information in short message information and improve the user experience effect, embodiments of the present application provide a short message information transmission method. FIG. 1 shows a flowchart of a short message information transmission method provided by an exemplary embodiment of the present application, and the method is performed by a satellite network. In the embodiment of the present application, the satellite network may be implemented as a satellite system, or the satellite network may also be implemented as a ground center station. As shown in FIG. 1, the short message information transmission method may include the following steps.

At step 110, first short message information sent by a sending end is received, the first short message information including first location information.

In a possible implementation, the sending end accesses the satellite network. After the short message information has been edited, if the sending end receives a touch operation on a sending control, the short message information is sent to the satellite network. In this process, if an option indicating carrying of location information is selected, when the short message information is sent, the first location information is added to the short message information, and the first short message information including the first location information is sent to the satellite network. Correspondingly, the satellite network receives the first short message information including the first location information.

The location information includes but is not limited to at least one of a longitude and latitude, an altitude, location time, or a beam cell identification of a resident satellite network.

At step 120, the first location information in the first short message information is authenticated to obtain an authentication result.

After receiving the first short message information, the satellite network parses the first short message information to obtain the first location information therein and authenticates the first location information. In the embodiments of the present application, the sending end may acquire the first location information through active location or passive location. Corresponding to different location manners, the satellite network may authenticate the first location information through different authentication methods.

At step 130, the first short message information and the authentication result are sent to a receiving end of the first short message information.

The authentication result may indicate that the first location information is real location information, or may indicate that the first location information is suspicious location information. By sending the first short message information and the authentication result to the receiving end of the first short message information, the receiving end can determine the authenticity of the first location information based on the authentication result.

In summary, according to the short message information transmission method provided by the embodiment of the present application, when interaction of the short message information is performed between the sending end and the receiving end and the short message information includes the location information, the location information carried in the short message information is authenticated by the satellite network, and the obtained authentication result with the short message information is sent to the receiving end of the first short message information, so that the receiving end can know the authenticity of the location information. In the above method, the satellite network can perform real-time authentication on the location information carried in the received short message information, and notify the receiving end of the authenticity situation of the location information by means of the authentication result, thereby improving the transmission effect of the short message information.

Due to the fact that the sending end may acquire the location information through active location or passive location, different location information authentication manners are provided in the embodiments of the present application corresponding to the different ways in which the sending end acquires the location information. When the first location information is the location information acquired by the sending end through an active location mode, FIG. 2 shows a flowchart of a short message information transmission method provided by an exemplary embodiment of the present application, and the method is performed by a satellite network. In the embodiment of the present application, the satellite network can be implemented as a satellite system, or the satellite network can also be implemented as a ground center station. As shown in FIG. 2, the short message information transmission method may include the following steps.

At step 210, first short message information sent by a sending end is received, the first short message information including first location information.

In the embodiment shown in FIG. 2, the first short message information is location information acquired by the sending end through an active location mode.

Active location refers to a process that a user terminal transmits a radio positioning signal to a navigation satellite, the navigation satellite then forwards the signal to a ground center station, the ground center station sends a ranging signal, positioning settlement is performed at the ground center station based on the time of signal transmission, and then positioning information also location information is sent to the user terminal. At present, most satellite systems adopt a transparent transmission method, and the relevant service logic is implemented at the ground center station. With the satellite technology becoming mature, subsequent satellite systems can undertake most of the service logic. Therefore, when the sending end acquires the first location information through an active location mode, the ground center station or the satellite system not only sends the acquired first location information to the sending end, but also saves a latest location record obtained by latest locating of the sending end in a local database of the ground center station or the satellite system, so that the ground center station or the satellite system can authenticate the location information carried in the short message information from the sending end based on the latest location record subsequently.

At step 220, based on a user identification of the sending end, a local database is queried for a latest location record corresponding to the user identification.

In the embodiment of the present application, the satellite network may store a location result of active location in the local database at the sending end, so as to query the latest location record corresponding to the sending end when the first short message information from the sending end is received, and authenticate the first location information by means of location information corresponding to the latest location record.

At step 230, the first location information is matched with second location information corresponding to the latest location record to obtain an authentication result.

In response to that the second location information matches the first location information, the authentication result indicates that the first location information is real location information; or in response to that the second location information does not match the first location information, the authentication result indicates that the first location information is suspicious location information.

Due to the fact that the first location information carried in the first short message information may be location information which is obtained by tampering with the location information sent by the satellite network to the sending end by a third-party tool, or may be location information which is obtained by intercepting the location information sent by the satellite network to the sending end and then forged by a third-party tool, authentication of the location information carried in the short message information can be achieved by matching the location information stored in the local database of the satellite network with the location information carried in the first short message information.

At step 240, the first short message information and the authentication result are sent to a receiving end of the first short message information.

In a possible implementation, in order to improve the comprehensiveness of information acquired by the receiving end, regardless of whether the authentication result indicates that the first location information is real location information or suspicious location information, the first short message information and the authentication result are sent to the receiving end of the first short message information.

In another possible implementation, the first short message information and the authentication result are sent to the receiving end of the first short message information when the authentication result indicates that the first location information is the real location information.

After the authentication result indicates that the first location information is the suspicious location information, it represents that the first location information may have been tampered with or forged. In order to improve the security of short message information transmission, when the authentication result indicates that the first location information is the suspicious location information, the first short message information is not transmitted; and when the authentication result indicates that the first location information is the real location information, the first short message information and the authentication result are transmitted.

In another possible implementation, when the authentication result indicates that the first location information is suspicious location information, the first location information is replaced with the second location information, and the authentication result is changed to indicate that the location information included in the first short message information is real location information; and the first short message information and the changed authentication result are sent to the receiving end of the first short message information.

Due to the fact that the second location information stored in the satellite network is the latest and real location information of the sending end, the satellite network may change the first location information to the second location information after determining that the first location information is suspicious location information. At this time, the location information carried in the first short message information is real location information. Therefore, the authentication result is changed to indicate that the first short message information carries the real location information, so that the receiving end receives the real location information and obtains the corresponding authentication result.

In some scenarios, the third-party tool may tamper with the altitude to zero when forging the location information, while the altitude in the real location information is not zero. Illustratively, the real location information may be: 08:55:37.663 LocationManagerService: incoming location: Location[gps 33.696143,110.325176 hAcc=51 et=+1d11h56m29s949ms alt=541.280029296875 vel=0.0 vAcc=80 sAcc=0 bAcc=??? {Bundle[{satellites=0,maxCn0=0,meanCn0=0}]}], where alt=541.280029296875 represents the altitude of 541.280029296875, and there may be alt=0 in the location information forged by the third-party tool. Therefore, in a possible implementation, the satellite network may further determine whether the first location information is real location information by means of an altitude parameter. This process may be implemented as follows: an altitude parameter in the first location information is acquired; when the altitude parameter is not zero, the authentication result is determined to indicate that the first location information is real location information; or when the altitude parameter is zero, the authentication result is determined indicate that the first location information is suspicious location information.

The authentication method of determining whether the first location information is real location information by means of the altitude parameter may be combined with the authentication method of using the location information in the local database of the satellite network to determine the authenticity of the first location information carried in the short message information, or the two authentication methods may be applied separately to determine the authenticity of the first location information carried in the short message information, which is not limited in the present application.

In another possible scenario, in order to ensure the authenticity of the first location information carried in the short message information, the sending end may not add the location information to the short message information after initiating active location. Instead, after receiving the short message information, the satellite network adds the location information stored in its local database, so as to reduce the risk that the location information is tampered with or forged when the location information is written by the sending end and the short message information is transmitted by the sending end. This process may be implemented as follows: second short message information from the sending end is received, wherein the second short message information includes a location addition identification, and the location addition identification is used to indicate to add location information acquired through an active location mode to the second short message information; in response to the location addition identification in the second short message information and based on a user identification of the sending end, a local database is queried for a latest location record corresponding to the user identification; third location information corresponding to the latest location record is added to the second short message information; and second short message information to which the third location information is added is sent to the receiving end of the first short message information.

In this process, the sending end accesses the satellite network. After the short message information has been edited, if the sending end receives a touch operation on a sending control, the short message information is sent to the satellite network. In this process, if an option indicating the carrying of the location information is selected, when the short message information is sent, the location addition identification is added to the short message information, and the second short message information including the location addition identification is sent to the satellite network. Correspondingly, the satellite network receives the second short message information including the location addition identification. Afterwards, in response to the location addition identification and based on a user identification of the sending end, the satellite network may query latest location information of the sending end in the local database, and add the latest location information to the second short message information, thereby ensuring the accuracy of the location information carried in the short message information received by the receiving end.

In summary, according to the short message information transmission method provided by the embodiment of the present application, when the sending end acquires the location information through an active location mode, the satellite network may authenticate the location information carried in the short message information sent by the sending end based on the latest location information of the sending end stored in the local database during active location, so as to determine the authenticity of the location information, and send the authentication result to the receiving end to improve the transmission effect of the short message information.

In addition, when the satellite network confirms that the short message information sent by the sending end carries suspicious location information, the latest location information of the sending end stored in the local database can be used to replace the suspicious location information, so that the receiving end may acquire the first short message information carrying real location information, thereby further improving the transmission effect of the short message information.

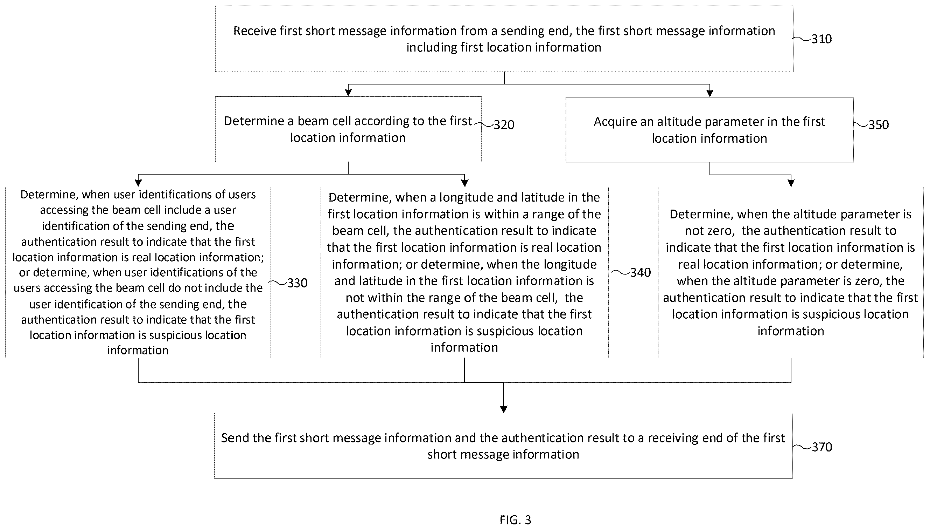

When the first location information is the location information acquired by the sending end through a passive location mode, FIG. 3 shows a flowchart of a short message information transmission method provided by an exemplary embodiment of the present application, and the method is performed by a satellite network. In the embodiment of the present application, the satellite network can be implemented as a satellite system, or the satellite network can also be implemented as a ground center station. As shown in FIG. 3, the short message information transmission method may include the following steps.

At step 310, first short message information sent by a sending end is received, the first short message information including first location information.

In the embodiment shown in FIG. 3, the first short message information is location information acquired by the sending end through a passive location mode.

Passive location refers to a process that user equipment does not need to transmit a radio signal to a navigation satellite, but instead receives signals from multiple satellites simultaneously and performs positioning settlement directly at a user terminal. Therefore, the satellite network does not store location information of a receiving end. At this time, the satellite network may authenticate the location information by means of other features in the first location information carried in the first short message information.

At step 320, a beam cell is determined according to the first location information.

The satellite network may determine the beam cell according to a beam cell identification included in the first location information. In a possible implementation, the satellite network may determine the authenticity of the first location information based on whether a user identification in the first location information exists among user identifications of users accessing the beam cell. In another possible implementation, the satellite network may also determine the authenticity of the first location information based on whether a longitude and latitude in the first location information exist within a range of the beam cell. In another possible implementation, the satellite network may also determine the authenticity of the first location information based on an altitude parameter included in the first location information. The above three authentication methods can be applied independently, or combined in pairs, or applied comprehensively to determine the authenticity of the first location information carried in the short message information.

At step 330, when user identifications of users accessing the beam cell include a user identification of the sending end, the authentication result is determined to indicate that the first location information is real location information; or when user identifications of the users accessing the beam cell do not include the user identification of the sending end, the authentication result is determined to indicate that the first location information is suspicious location information.

The satellite network may query the users accessing the beam cell, to match the user identification of the sending end with user identifications of the users accessing the beam cell, so as to determine whether the sending end accesses the beam cell, thereby achieving authentication of the first location information.

At step 340, when a longitude and latitude in the first location information is within the range of the beam cell, the authentication result is determined to indicate that the first location information is real location information; or when the longitude and latitude in the first location information is not within the range of the beam cell, the authentication result is determined to indicate that the first location information is suspicious location information.

In a case where the first location information includes the longitude and latitude as well as the beam cell identification, if the first location information is real location information, the longitude and latitude range corresponding to the beam cell identification included therein should match with the longitude and latitude included therein. That is, the longitude and latitude in the first location information is within the longitude and latitude range corresponding to the beam cell. On the contrary, if the first location information is suspicious location information, the longitude and latitude range corresponding to the beam cell identification included therein should not match with the longitude and latitude included therein. That is, the longitude and latitude in the first location information is not within the longitude and latitude range corresponding to the beam cell.

At step 350, an altitude parameter in the first location information is acquired.

At step 360, when the altitude parameter is not zero, the authentication result is determined to indicate that the first location information is the real location information; or when the altitude parameter is zero, the authentication result is determined to indicate that the first location information is the suspicious location information.

At step 370, the first short message information and the authentication result are sent to a receiving end of the first short message information.

In summary, according to the short message information transmission method provided by the embodiment of the present application, when the sending end acquires the location information through a passive location mode, the satellite network may authenticate the location information carried in the short message information based on the features in the first location information. This includes: determining whether the beam cell in the first location information includes the user identification of the sending end, determining whether the longitude and latitude in the first location information exists within the beam cell range corresponding to the beam cell identification included therein, and determining whether the altitude parameter in the first location information is zero, so as to determine the authenticity of the location information. Moreover, the authentication result is sent to the receiving end to improve the transmission effect of the short message information.

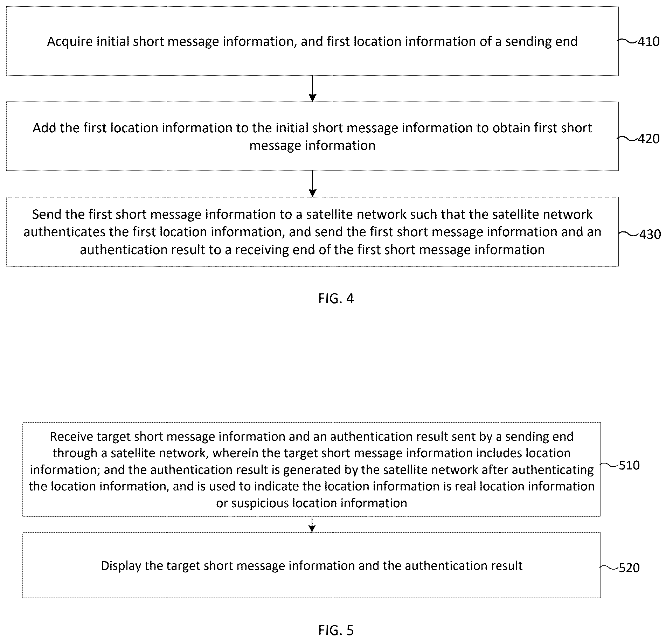

FIG. 4 shows a flowchart of a short message information transmission method provided by an exemplary embodiment of the present application. The method is performed by a sending end, and the sending end may be a terminal device. As shown in FIG. 4, the short message information transmission method may include the following steps.

At step 410, initial short message information, and first location information of the sending end are acquired.

After the sending end accesses a satellite network and completes editing of short message information, the initial short message information may be obtained.

In the embodiment of the present application, the sending end may include a determining module, a location module, a short message management module, and a sending module. After acquiring the initial short message information, the sending end determines whether an option indicating carrying of the location information is selected by the determining module, and when it is determined that the option is selected, the sending end notifies the location module to locate the sending end to acquire the first location information of the sending end. The location manner can be pre-configured, or a location manner option may be displayed at the sending end, so that the location module acquires the first location information of the sending end based on the selected location manner. When it is determined that the option is not selected, the sending module is directly notified to send the initial short message information, that is, the short message information sent to a receiving end does not carry location information.

When the first location information is location information acquired by the sending end through an active location mode, upon receiving a location addition indication, the sending end sends an active location request to the satellite network such that the satellite network locates the sending end based on the active location request and record latest location information of the sending end in a local database to authenticate the first location information based on the latest location information.

In the embodiment of the present application, when the option of carrying the location information is in the selected state, the sending end confirms reception of the location addition indication. When the pre-configured location manner is active location, or when the option indicating active location in the sending end is in the selected state, the location module of the sending end sends the active location request to the satellite network to obtain the location information fed back from the satellite network. At the same time, the satellite module may record the acquired latest location information of the sending end in the local database for subsequent authentication of the location information carried in the short message information sent by the sending end.

At step 420, the first location information is added to the initial short message information to obtain first short message information.

After acquiring the first location information, the location module in the sending end notifies the short message management module to add the first location information to the initial short message information so as to obtain the first short message information. Afterwards, the short message management module notifies the sending module to send the first short message information to the receiving end through the satellite network.

At step 430, the first short message information is sent to the satellite network such that the satellite network authenticates the first location information, and the first short message information and an authentication result are sent to the receiving end of the first short message information.

The process of authenticating the first location information through the satellite network may refer to the relevant content of the embodiments shown in FIG. 1 to FIG. 3, which will be omitted here.

In another possible implementation, when the sending end determines that the option of carrying the location information is in the selected state, by means of the determining module the location module is notified to send the active location request to the satellite network, so as to indicate the satellite network to acquire the location information of the sending end through an active location mode. At the same time, the short message management module is notified to add a location addition identification in the initial short message information, so as to indicate the satellite network to add the latest location information of the sending end to the short message information. This process may be implemented as follows: second short message information is acquired, wherein the second short message information includes the location addition identification, and the location addition identification is used to indicate to add location information acquired through an active location mode to the second short message information; and the second short message information is sent to the satellite network, such that the satellite network queries a local database for a latest location record corresponding to a user identification of the sending end based on the location addition identification in the second short message information, adds third location information corresponding to the latest location record to the second short message information, and sends second short message information to which the third location information is added to the receiving end of the first short message information.

The process of acquiring the second short message information may be implemented as follows: the initial short message information is acquired; and upon receiving a location addition indication, the location addition identification is added to the initial short message information to generate the second short message information.

When the sending end determines that the option of carrying the location information is in the selected state by the determining module, it is confirmed that the location addition indication is received.

Adding the location information to the short message information by the satellite network can effectively reduce the risk that the location information is tampered with or forged when the location information is written by the sending end and the short message information is transmitted by the sending end.

In summary, according to the short message information transmission method provided by the embodiment of the present application, when interaction of the short message information is performed between the sending end and the receiving end, the location information is added to the short message information by the sending end, the location information carried in the short message information is authenticated by the satellite network, and the obtained authentication result together with the short message information is sent to the receiving end of the first short message information, so that the receiving end can know the authenticity of the location information. In the above method, the satellite network can perform real-time authentication on the location information carried in the received short message information, and notify the receiving end of the authenticity situation of the location information by means of the authentication result, thereby improving the transmission effect of the short message information.

FIG. 5 shows a flowchart of a short message information transmission method provided by an exemplary embodiment of the present application. The method is performed by a receiving end. In the embodiments of the present application, the receiving end may be a terminal device. As shown in FIG. 5, the short message information transmission method may include the following steps.

At step 510, target short message information and an authentication result sent by a sending end through a satellite network are received, wherein the target short message information includes location information; and the authentication result is generated by the satellite network after authenticating the location information, and is used to indicate whether the location information is real location information or suspicious location information.

The process of authenticating the location information by the satellite network may refer to the relevant content of the embodiments shown in FIG. 1 to FIG. 4, which will be omitted here.

At step 520, the target short message information and the authentication result are displayed.

In the embodiments of the present application, the receiving end may include a monitoring module, a short message management module, and a display module. The monitoring module is used to monitor whether short message information sent by the satellite network is received. The short message management module is used to parse the received short message information to obtain a content contained in the short message information. The display module is used to visually display the content obtained by parsing by the short message management module.

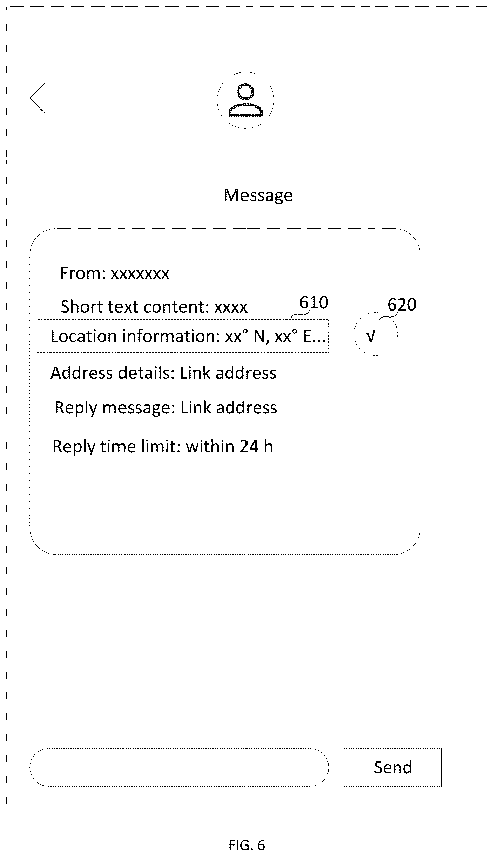

FIG. 6 shows a schematic diagram of an interface of a receiving end provided by an exemplary embodiment of the present application. As shown in FIG. 6, the receiving end displays target message information and an authentication result, where the target message information includes a message content and location information 610. The location information may include but is not limited to at least one of a longitude and latitude, an altitude, location time, or a beam cell identification of a resident satellite network. The authentication result may be displayed in a location information field. Optionally, the authentication result may be displayed in the form of texts. For example, when it is determined that the location information is real location information, the authentication result may be displayed as "authentication passed", and when it is determined that the location information is suspicious location information, the authentication result may be displayed as "authentication failed". Alternatively, the authentication result may also be displayed in the form of identifications. For example, when it is determined that the location information is real location information, the authentication result may be displayed as "√" (such as location information 620 as shown in FIG. 6), and when it is determined that the location information is suspicious location information, the authentication result may be displayed as "×", etc. The display manner of the authentication result is not limited in the embodiments of the present application.

In a possible implementation, when a sending end receives a short message carrying the location information, the receiving end may prompt a user in a pre-set prompt manner. This process may be implemented as follows: upon that the target short message information is received, a prompt of information reception is provided in a target prompt manner, where the target prompt manner corresponding to the target short message information.

Illustratively, the target prompt manner includes but is not limited to at least one of voice broadcasting, lamp flickering, or vibration. The target prompt manner may be set based on user configurations, which is not limited in the present application. When the target prompt manner is voice broadcasting, the content of voice broadcasting may be a pre-set notification content, such as "receiving one piece of short message information carrying location information", or the content of voice broadcasting may also be all or part of the content in the received target short message information, such as broadcasting the location information carried in the target short message information and the authentication result.

The receiving end may also include a broadcasting module, which is used for providing prompt of information reception through the target prompt manner.

In summary, according to the short message information transmission method provided by the embodiment of the present application, when interaction of the short message information is performed between the sending end and the receiving end and the short message information includes the location information, the location information carried in the short message information is authenticated by the satellite network, and the obtained authentication result together with the short message information are sent to the receiving end of the first short message information, so that the receiving end can know the authenticity of the location information. In the above method, the satellite network can perform real-time authentication on the location information carried in the received short message information, and notify the receiving end of the authenticity situation of the location information by means of the authentication result, thereby improving the transmission effect of the short message information.

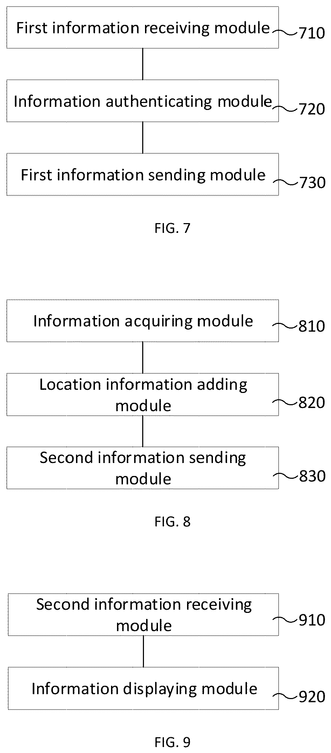

FIG. 7 shows a block diagram of a short message information transmission apparatus provided by an exemplary embodiment of the present application. The apparatus is applied to a satellite network. In the embodiment of the present application, the satellite network may be implemented as a satellite system or as a ground center station. The short message information transmission apparatus may implement all or part of the steps of the embodiments shown in FIG. 1, FIG. 2, or FIG. 3, and the apparatus includes: a first information receiving module 710, configured to receive first short message information from a sending end, the first short message information including first location information; an information authenticating module 720, configured to authenticate the first location information in the first short message information to obtain an authentication result; and a first information sending module 730, configured to send the first short message information and the authentication result to a receiving end.

In a possible implementation, the information authenticating module 720 includes: a record querying submodule, configured to query, based on a user identification of the sending end, a latest location record corresponding to the user identification in a local database when the first location information is location information acquired by the sending end through an active location mode; and a matching submodule, configured to match the first location information with second location information corresponding to the latest location record to obtain the authentication result. In response to that the second location information matches the first location information, the authentication result indicates that the first location information is real location information; or in response to that the second location information does not match the first location information, the authentication result indicates that the first location information is suspicious location information.

In a possible implementation, the first information sending module 730 is configured to send the first short message information and the authentication result to the receiving end of the first short message information when the authentication result indicates that the first location information is the real location information.

In a possible implementation, the first information sending module 730 includes: an information replacing submodule, configured to replace the first location information with the second location information, and change the authentication result to indicate that the location information included in the first short message information is real location information when the authentication result indicates that the first location information is suspicious location information; and an information sending submodule, configured to send the first short message information and a changed authentication result to the receiving end of the first short message information.

In a possible implementation, the information authenticating module 720 includes: a beam cell determining module, configured to determine, a beam cell according to the first location information when the first location information is location information acquired by the sending end through a passive location mode; and an information authenticating submodule, configured to determine the authentication result to indicate that the first location information is real location information when user identifications of users accessing the beam cell include a user identification of the sending end; or determine the authentication result to indicate that the first location information is suspicious location information when user identifications of users accessing the beam cell do not include the user identification of the sending end.

In a possible implementation, the information authenticating submodule is configured to determine the authentication result to indicate that the first location information is real location information when a longitude and latitude in the first location information is within a range of the beam cell; or determine the authentication result to indicate that the first location information is suspicious location information when the longitude and latitude in the first location information is not within the range of the beam cell.

In a possible implementation, the information authenticating module 720 includes: a parameter acquiring submodule, configured to acquire an altitude parameter in the first location information; and the information authenticating submodule, configured to determine the authentication result to indicate that the first location information is real location information, when the altitude parameter is not zero; or determine the authentication result to indicate that the first location information is suspicious location information when the altitude parameter is zero.

In a possible implementation, the first receiving module is configured to receive second short message information from the sending end, wherein the second short message information includes a location addition identification, and the location addition identification is used to indicate to add location information acquired through an active location mode to the second short message information. The apparatus further includes: an identification addition module, configured to query , in response to the location addition identification in the second short message information, a latest location record corresponding to the user identification of the sending end in a local database; an adding module, configured to add third location information corresponding to the latest location record to the second short message information; and the first information sending module 730, configured to send the second short message information with the added third location information to the receiving end of the first short message information.

In summary, according to the short message information transmission apparatus provided by the embodiments of the present application, when interaction of the short message information is performed between the sending end and the receiving end and the short message information includes location information, the location information carried in the short message information is authenticated by the satellite network, and the obtained authentication result together with the short message information are sent to the receiving end of the first short message information, so that the receiving end can know the authenticity of the location information. Through the above apparatus, the satellite network can perform real-time authentication on the location information carried in the received short message information, and notify the receiving end of the authenticity situation of the location information by means of the authentication result, thereby improving the transmission effect of the short message information.

FIG. 8 shows a block diagram of a short message information transmission apparatus provided by an exemplary embodiment of the present application. The apparatus is applied to a sending end, and the sending end may be a terminal device. The short message information transmission apparatus can implement all or part of the steps of the embodiment shown in FIG. 4. As shown in FIG. 8, the apparatus includes: an information acquiring module 810, configured to acquire initial short message information, and first location information of the sending end; a location information adding module 820, configured to add the first location information to the initial short message information to obtain first short message information; and a second information sending module 830, configured to send the first short message information to a satellite network such that the satellite network authenticates the first location information, and send the first short message information and an authentication result to a receiving end of the first short message information.

In a possible implementation, the apparatus further includes: a request sending module, configured to send, upon receiving a location addition indication, an active location request to the satellite network when the first location information is location information acquired by the sending end through an active location mode, such that the satellite network locates the sending end based on the active location request, and record latest location information of the sending end in a local database, so as to authenticate the first location information based on the latest location information.

In a possible implementation, the information acquiring module 810 is configured to acquire second short message information, wherein the second short message information includes a location addition identification, and the location addition identification is used to indicate to add location information acquired through an active location mode to the second short message information. The second information sending module 830 is configured to send the second short message information to the satellite network, such that the satellite network queries a local database for a latest location record corresponding to a user identification of the sending end based on the location addition identification in the second short message information, adds third location information corresponding to the latest location record to the second short message information, and sends second short message information to which the third location information is added to the receiving end of the first short message information.

In a possible implementation, the information acquiring module 810 is configured to acquire the initial short message information; and add, upon receiving the location addition indication, the location addition identification to the initial short message information to generate the second short message information.

In summary, according to the short message information transmission apparatus provided by the embodiments of the present application, when interaction of the short message information is performed between the sending end and the receiving end, the location information is added to the short message information by the sending end, the location information carried in the short message information is authenticated by the satellite network, and the obtained authentication result together with the short message information are sent to the receiving end of the first short message information, so that the receiving end can know the authenticity of the location information. Through the above apparatus, the sending end can send the short message information carrying the location information to the satellite network, so that the satellite network can perform real-time authentication on the location information carried in the received short message information, and notify the receiving end of the authenticity situation of the location information by means of the authentication result, thereby improving the transmission effect of the short message information.

FIG. 9 shows a block diagram of a short message information transmission apparatus provided by an exemplary embodiment of the present application. The apparatus is applied to a receiving end, and the receiving end may be a terminal device. The short message information transmission apparatus may implement all or part of the steps of the embodiment shown in FIG. 5. As shown in FIG. 9, the apparatus includes: a second information receiving module 910, configured to receive target short message information and an authentication result sent by a sending end through a satellite network, wherein the target short message information includes location information; and the authentication result indicates the location information is real location information or suspicious location information; and an information displaying module 920, configured to display the target short message information and the authentication result.

In a possible implementation, the apparatus further includes: a prompting module, configured to providing prompt of information reception in a target prompt manner upon receiving the target short message information, the target prompt manner corresponding to the target short message information.

In summary, according to the short message information transmission apparatus provided by the embodiments of the present application, when interaction of the short message information is performed between the sending end and the receiving end and the short message information includes the location information, the location information carried in the short message information is authenticated by the satellite network, and the obtained authentication result together with the short message information are sent to the receiving end of the first short message information, so that the receiving end can know the authenticity of the location information. Through the above apparatus, the receiving end can receive the authentication result after performing real-time authentication on the location information carried in the received short message information through the satellite network, and display the authentication result on the receiving end to prompt a user, thereby improving the transmission effect of the short message information.

In an exemplary embodiment, a computer device is provided. The computer device can be implemented as a target device, or as an external monitoring device, or as a remote control device in the present application. The computer device includes a processor and a memory, the memory stores at least one computer program, and the at least one computer program is loaded and executed by the processor to implement all or part of the steps of the short message information transmission method above.

In an exemplary embodiment, a computer-readable storage medium is further provided. The computer-readable storage medium stores at least one computer program therein, and the computer program is loaded and executed by a processor to implement all or part of the steps in the short message information transmission method above. For example, the computer-readable storage medium may be a read-only memory (ROM), a random access memory (RAM), a compact disc read-only memory (CD-ROM), a magnetic tape, a floppy disk, an optical data storage device and the like.

In an exemplary embodiment, a computer program product is further provided. The computer program product includes at least one computer program, and the computer program is loaded by a processor to execute all or part of the steps of the short message information transmission method shown in any embodiment of FIG. 1, FIG. 2, FIG. 3, FIG. 4, or FIG. 5 above.

Those skilled in the art will easily figure out other implementation solutions of the present application after considering the specification and practicing the invention disclosed here. The present disclosure is intended to cover any variations, uses, or adaptations of the present disclosure following the general principles of the present disclosure and including such departures from the present disclosure as come within known or customary practice in the art. The specification and the embodiments are merely regarded as being for example, and the true scope and spirit of the present application are indicated by the claims.

It will be appreciated that the present application is not limited to the exact structure that has been described above and shown in the accompanying drawings, and that various modifications and changes may be made without departing from the scope of the present application. The scope of the present application is limited merely by the appended claims.

## Claims

1. A short message information transmission method, performed by a satellite network, comprising:
receiving first short message information from a sending end, the first short message information comprising first location information;
authenticating the first location information in the first short message information to obtain an authentication result; and
sending the first short message information and the authentication result to a receiving end of the first short message information.

2. The method according to claim 1, wherein upon the condition that the first location information is location information acquired by the sending end through an active location mode, authenticating the first location information in the first short message information to obtain the authentication result comprises:
querying, based on a user identification of the sending end, a latest location record corresponding to the user identification in a local database; and
matching the first location information with second location information corresponding to the latest location record to obtain the authentication result;
wherein, in response to that the second location information matches the first location information, the authentication result indicates that the first location information is real location information; or in response to that the second location information does not match the first location information, the authentication result indicates that the first location information is suspicious location information.

3. The method according to claim 2, wherein sending the first short message information and the authentication result to the receiving end of the first short message information comprises:
sending, upon the condition that the authentication result indicates that the first location information is the real location information, the first short message information and the authentication result to the receiving end of the first short message information.

4. The method according to claim 2, wherein sending the first short message information and the authentication result to the receiving end of the first short message information comprises:
replacing, upon the condition that the authentication result indicates that the first location information is the suspicious location information, the first location information with the second location information, and changing the authentication result to indicate that the location information comprised in the first short message information is the real location information; and
sending the first short message information and a changed authentication result to the receiving end of the first short message information.

5. The method according to claim 1, wherein upon the condition that the first location information is location information acquired by the sending end through a passive location mode, authenticating the first location information in the first short message information to obtain the authentication result comprises:
determining a beam cell according to the first location information; and
determining, upon the condition that users accessing the beam cell comprise a user identification of the sending end, the authentication result to indicate that the first location information is real location information; or determining, upon the condition that users accessing the beam cell do not comprise the user identification of the sending end, the authentication result to indicate that the first location information is suspicious location information.

6. The method according to claim 1, wherein upon the condition that the first location information is location information acquired by the sending end through a passive location mode, authenticating the first location information in the first short message information to obtain the authentication result comprises:
determining a beam cell according to the first location information; and
determining, upon the condition that a longitude and latitude in the first location information is within a range of the beam cell, the authentication result to indicate that the first location information is real location information; or determining, upon the condition that the longitude and latitude in the first location information is not within the range of the beam cell, the authentication result to indicate that the first location information is suspicious location information.

7. The method according to claim 1, wherein authenticating the first location information in the first short message information to obtain the authentication result comprises:
acquiring an altitude parameter in the first location information; and
determining, upon the condition that the altitude parameter is not zero, the authentication result to indicate that the first location information is real location information; or determining, upon the condition that the altitude parameter is 0, the authentication result to indicate that the first location information is suspicious location information.

8. The method according to claim 1, further comprising:
receiving second short message information from the sending end, wherein the second short message information comprises a location addition identification, and the location addition identification is used to indicate to add location information acquired through an active location mode to the second short message information;
querying, in response to the location addition identification in the second short message information, a latest location record corresponding to a user identification of the sending end in a local database;
adding third location information corresponding to the latest location record to the second short message information; and
sending second short message information to which the third location information is added to the receiving end of the first short message information.

9. A short message information transmission method, performed by a sending end, comprising:
acquiring initial short message information, and first location information of the sending end;
adding the first location information to the initial short message information to obtain first short message information; and
sending the first short message information to a satellite network such that the satellite network authenticates the first location information, and sending the first short message information and an authentication result to a receiving end of the first short message information.

10. The method according to claim 9, wherein upon the condition that the first location information is location information acquired by the sending end through the active location mode, the method further comprises:
sending, upon receiving a location addition indication, an active location request to the satellite network such that the satellite network locates the sending end based on the active location request, and recording latest location information of the sending end in a local database, so as to authenticate the first location information based on the latest location information.

11. The method according to claim 9, further comprising:
acquiring second short message information, wherein the second short message information comprises a location addition identification, and the location addition identification is used to indicate to add location information acquired through the active location mode to the second short message information; and
sending the second short message information to the satellite network, such that the satellite network queries a local database for a latest location record corresponding to a user identification of the sending end based on the location addition identification in the second short message information, adds third location information corresponding to the latest location record to the second short message information, and sends second short message information to which the third location information is added to the receiving end of the first short message information.

12. The method according to claim 11, wherein acquiring the second short message information comprises:
acquiring the initial short message information; and
adding, upon receiving the location addition indication, the location addition identification to the initial short message information to generate the second short message information.

13. A short message information transmission method, performed by a receiving end, comprising:
receiving target short message information and an authentication result sent by a sending end through a satellite network, wherein the target short message information comprises location information; and the authentication result is generated by the satellite network after authenticating the location information, and is used to indicate the location information is real location information or suspicious location information; and
displaying the target short message information and the authentication result.

14. The method according to claim 13, further comprising:
providing, upon receiving the target short message information, a prompt of information reception in a target prompt manner, the target prompt manner corresponding to the target short message information.

15. A computer device, comprising a processor and a memory, wherein the memory stores at least one computer program, and the at least one computer program is loaded and executed by the processor to implement the short message information transmission method according to any one of claims 1 to 14.

16. A computer-readable storage medium, having at least one computer program stored therein, wherein the computer program is loaded and executed by a processor to implement the short message information transmission method according to any one of claims 1 to 14.
